# EUROPEAN PATENT APPLICATION

(11) **EP 4 556 339 A1**
(43) Date of publication of application: **21.05.2025**
(21) Application number: 23210854.8
(22) Date of filing: 20.11.2023
(51) Int. Cl.: B60W 50/00, B60W 50/02, B60W 50/023

(54) **DISTRIBUTED CONTROL FOR VEHICLE COMBINATIONS**

(71) Applicant: Volvo Truck Corporation, 405 08 Göteborg (SE)
(72) Inventor: HENDERSON, Leon, 438 92 HÄRRYDA (SE); JONASSON, Mats, 433 49 PARTILLE (SE); SCHOUTISSEN, Simon, 423 46 TORSLANDA (SE)
(74) Representative: Ström & Gulliksson AB

(57) **Abstract**

A computer system for a vehicle combination is disclosed, the computer system comprising a first controller implemented in a first unit of the vehicle combination, the first controller configured to, in a first mode of operation, determine a requested unit control input for one or more units of the vehicle combination based on a reference input representing a requested movement of the vehicle combination, and a second controller implemented in a second unit of the vehicle combination, the second controller configured to, in the first mode of operation, receive a requested unit control input for the second unit from the first controller, and implement the requested unit control input for the second unit in the second unit, and, in a second mode of operation, determine a requested unit control input for one or more units of the vehicle combination based on the reference input. A computer-implemented method, computer program product, and non-transitory computer-readable storage medium are also disclosed.

## Description

### TECHNICAL FIELD

The disclosure relates generally to vehicle control. In particular aspects, the disclosure relates to distributed control for vehicle combinations. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A control system for a vehicle combination may comprise a primary controller and a secondary (back-up) controller for use if and when the primary controller fails, for example to continue the vehicle's mission, or to enable a safe stop manoeuvre to be performed. The controllers are typically located in the tractor unit of the vehicle combination. However, significant additional infrastructure is required to implement a secondary controller that is only active in the case of a fault, for example hardware required to implement the secondary controller and infrastructure to detect faults in the primary controller.

It is therefore desired to provide systems, methods and other approaches that attempt to resolve or at least mitigate one or more of these issues.

### SUMMARY

This disclosure provides systems, methods and other approaches for controlling a vehicle combination. In particular, a control system is provided comprising a first controller implemented in a first unit of the vehicle combination and a second controller implemented in a second unit of the vehicle combination. During normal operation, the first controller is configured to determine control inputs for other units of the vehicle combination, and the second controller is configured to receive and implement a control input for the second unit. In another mode of operation, for example where there is a fault with the first controller or the first unit, the second controller is configured to determine control inputs for other units of the vehicle combination.

According to a first aspect of the disclosure, there is provided a computer system comprising processing circuitry configured to implement a first controller implemented in a first unit of the vehicle combination, the first controller configured to, in a first mode of operation, determine a requested unit control input for one or more units of the vehicle combination based on a reference input representing a requested movement of the vehicle combination, a second controller implemented in a second unit of the vehicle combination, the second controller configured to, in the first mode of operation, receive a requested unit control input for the second unit from the first controller, and implement the requested unit control input for the second unit in the second unit, and, in a second mode of operation, determine a requested unit control input for one or more units of the vehicle combination based on the reference input.

The first aspect of the disclosure may seek to provide an approach to vehicle motion management that provides redundancy for the functions of a primary controller, such that safe and accurate control of the vehicle combination can be ensured at all times. By implementing a secondary controller in a different unit from the primary controller, it can be used independent of the status of the primary controller and its unit (e.g. in case of failure). Another advantage of this approach is that these functions can be provided by a controller that may already be implemented in the vehicle combination, thus negating the need for the additional infrastructure required for an additional independent back-up controller.

Optionally in some examples, including in at least one preferred example, the second mode of operation is triggered by detection of a fault associated with the first controller and/or the first unit. A technical benefit may include that redundancy for the functions of a primary controller is provided in case of error or failure of the primary controller, such that safe and accurate control of the vehicle combination can be ensured at all times.

Optionally in some examples, including in at least one preferred example, the processing circuitry is further configured to implement a monitor configured to monitor operation of the first controller and/or the first unit and detect the fault. A technical benefit may include reactive and real-time detection of fault associated with a primary controller and/or its unit.

Optionally in some examples, including in at least one preferred example, the monitor is configured to detect the fault by comparing the requested control input from the first controller with one or more requested unit control inputs and/or one or more limits. A technical benefit may include the provision of an accurate and robust approach to detecting faults in a controller.

Optionally in some examples, including in at least one preferred example, the monitor is configured to detect the fault by determining sensor values and/or covariance values associated with one or more units of the vehicle combination. A technical benefit may include the provision of an accurate and robust approach to detecting faults in a controller.

Optionally in some examples, including in at least one preferred example, the monitor is implemented in the second controller. A technical benefit may include that the performance of a primary controller may be monitored externally from its unit, ensuring accurate and robust fault detection.

Optionally in some examples, including in at least one preferred example, in the second mode of operation, the second controller is configured to implement a requested unit control input for the first unit in the first unit. A technical benefit may include the provision of control of a unit even in the case that the controller of that unit has a fault.

Optionally in some examples, including in at least one preferred example, the processing circuitry is further configured to implement a comparator, and, in the first mode of operation, the second controller is configured to determine a predicted unit control input for the one or more units of the vehicle combination based on the reference input, and the comparator is configured to compare the one or more requested unit control inputs from the first controller and the one or more predicted unit control inputs from the second controller, and, if there is a difference between the one or more requested unit control inputs and the one or more predicted unit control inputs, determine that there is a fault associated with the first controller or the second controller. A technical benefit may include the provision of an accurate and robust approach to detecting faults in a controller.

Optionally in some examples, including in at least one preferred example, the processing circuitry is further configured to implement a dummy controller and, in the first mode of operation, the dummy controller is configured to determine a dummy unit control input for the one or more units of the vehicle combination based on the reference input, and the comparator is further configured to compare the one or more requested unit control inputs, the one or more predicted vehicle control inputs, and the one or more dummy vehicle control inputs, and determine which of the first controller or the second controller has a fault based on the comparison. A technical benefit may include the provision of an accurate and robust approach to detecting faults in a controller.

Optionally in some examples, including in at least one preferred example, the processing circuitry is further configured to implement a third controller configured to implement a minimum risk manoeuvre in response to detection of a fault associated with the first controller and/or the second controller. A technical benefit may include a the provision of a fail-safe mechanism that enables the vehicle combination to be controlled in a safe manner in case of failure of one or more controllers.

Optionally in some examples, including in at least one preferred example, the first unit is a tractor unit of the vehicle combination, and the second unit is a trailing unit of the vehicle combination. A technical benefit may include the provision of redundancy for the functions of a primary controller that can be implemented in existing control infrastructure of a vehicle combination.

According to a second aspect of the disclosure, there is provided a vehicle comprising the computer system. The second aspect of the disclosure may seek to provide a vehicle combination with redundancy for the functions of a primary controller that can be implemented in existing control infrastructure.

According to a third aspect of the disclosure, there is provided a computer-implemented method comprising, in a first mode of operation, determining, at a first controller implemented in a first unit of a vehicle combination, a requested unit control input for one or more units of the vehicle combination based on a reference input representing a requested movement of the vehicle combination, receiving, by a second controller implemented in a second unit of the vehicle combination, a requested unit control input for the second unit from the first controller, and implementing, by the second controller, the requested unit control input for the second unit in the second unit, and, in a second mode of operation, determining, by the second controller, a requested unit control input for one or more units of the vehicle combination based on the reference input.

The third aspect of the disclosure may seek to provide an approach to vehicle motion management that provides redundancy for the functions of a primary controller, such that safe and accurate control of the vehicle combination can be ensured at all times. By implementing a secondary controller in a different unit from the primary controller, it can be used independent of the status of the primary controller and its unit (e.g. in case of failure). Another advantage of this approach is that these functions can be provided by a controller that may already be implemented in the vehicle combination, thus negating the need for the additional infrastructure required for an additional independent back-up controller.

According to a fourth aspect of the disclosure, there is provided a computer program product comprising program code for performing, when executed by processing circuitry, the computer-implemented method. The fourth aspect of the disclosure may seek to provide program code for providing redundancy for the functions of a primary controller. A technical benefit may include that new vehicles and/or legacy vehicles may be conveniently configured, by software installation/update, to be controlled in an improved manner.

According to a fifth aspect of the disclosure, there is provided a non-transitory computer-readable storage medium comprising instructions, which when executed by processing circuitry, cause the processing circuitry to perform the computer-implemented method. The fifth aspect of the disclosure may seek to provide program code for providing redundancy for the functions of a primary controller. A technical benefit may include that new vehicles and/or legacy vehicles may be conveniently configured, by software installation/update, to be controlled in an improved manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a top view of a vehicle combination according to an example.
**FIG. 2** schematically shows, in terms of functional blocks, a control system for a vehicle according to an example.
**FIG. 3** schematically shows an implementation of the control system in a top view of a vehicle combination according to an example.
**FIG. 4A** schematically shows, in terms of functional blocks, a first mode of operation for the control system according to an example.
**FIG. 4B** schematically shows, in terms of functional blocks, a second mode of operation for the control system according to an example.
**FIG. 5** schematically shows, in terms of functional blocks, an implementation of the control system according to another example.
**FIG. 6A** is a flow chart of a computer-implemented method according to an example.
**FIG. 6B** is a flow chart of a computer-implemented method according to an example.
**FIG. 7** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

A control system for a vehicle combination may comprise a primary controller and a secondary (back-up) controller for use if and when the primary controller fails. Both controllers are typically located in the tractor unit of the vehicle combination. Such implementations require significant additional infrastructure to implement a secondary controller that is only active in the case of a fault. Furthermore, if the controllers are located in the same unit, serious failure of that unit may result in both controllers failing.

To remedy this, systems, methods and other approaches are provided for controlling a vehicle combination. In particular, a control system is provided comprising a first controller implemented in a first unit of the vehicle combination and a second controller implemented in a second unit of the vehicle combination. During normal operation, the first controller is configured to determine control inputs for other units of the vehicle combination, and the second controller is configured to receive and implement a control input for the second unit. In another mode of operation, for example when there is a fault with the first controller or the first unit, the second controller is configured to determine control inputs for other units of the vehicle combination.

This can ensure safe and accurate control of the vehicle combination at all times. By implementing the second controller in a different unit from the first controller, it can be used independent of the status of the first controller and its unit (e.g. in case of failure of the first controller or serious failure of the first unit). Another advantage of this approach is that the second controller can be implemented in existing control infrastructure of a vehicle unit. For example, modern 'smart' trailers have controllers for coordinating various devices of the individual unit (e.g. service brake actuators, propulsion devices, steered axles, auto docking systems). The trailer controllers may operate in a master-slave configuration with a primary controller located in a tractor unit. These existing trailer controllers can be used as a second controller for the vehicle combination, and take over in case of a fault with the first controller, thus negating the need for the additional infrastructure required for an additional independent back-up controller.

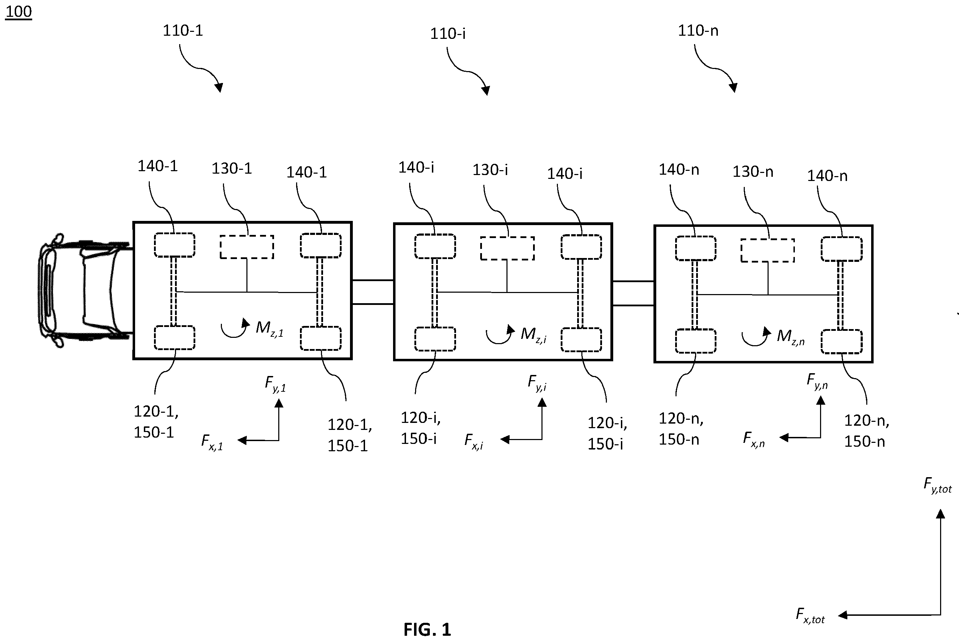

**FIG. 1** schematically shows a top view of an example vehicle combination **100** of the type considered in this disclosure. The vehicle combination **100** comprises a number of units **110,** including a tractor unit and at least one trailing unit. Each unit **110** may be given an index *i,* and the total number of units **110** in a vehicle combination **100** is designated *n.* Whilst two trailing units are shown, it will be appreciated that the vehicle combination **100** may comprise more or fewer trailing units connected to each other. This gives rise to different types and designations of vehicle combinations.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1****,** the tractor unit **110-1** may also be used to store goods that are being transported by the vehicle combination **100.**

A trailing unit, such as the trailing units **110-i, 110-n,** is generally used to store goods that are being transported by the vehicle combination **100.** A trailing unit may be a truck, trailer, dolly and the like. A trailing unit may also provide propulsion to the vehicle combination **100.** A trailing unit without a front axle is known as a semi-trailer. In vehicle combinations such as that shown in **FIG. 1****,** vehicle motion management is available on a unit level to receive requests from a manual or virtual driver to coordinate the propulsion, braking and steering, as will be discussed below.

Whilst two axles per unit **110** are shown, it will be appreciated that any suitable number of axles may be provide on the respective units **110.** It will also be appreciated that any number of the tractor axles and/or trailer axles may be driven axles, including zero (i.e. one of the units **110** may include at least one driven axle while the other does not).

The vehicle combination **100** may comprise one or more sources of propulsion. For example, one or more of the units **110** may comprise one or more electrical machines **120** (such as electric motors). Each unit **110** may comprise one or more batteries **130** configured to provide power to electrical machines **120.** In some examples, a unit **110,** most often a tractor unit **110-1,** may also include another source of propulsion, for example an internal combustion engine (ICE). The vehicle combination **100** also comprises a drivetrain (not shown) to deliver mechanical power from the propulsion source (the electrical machines **120** or the ICE) to the wheels. All units **110** may provide propulsion to the vehicle combination **100.**

The electrical machines **120** are configured to drive, e.g. provide torque and/or steering to, one or more axles or individual wheels of the unit **110.** The electrical machines **120** of a unit **110** can supply either a positive (propulsion) or negative (braking) force. In some examples, electric motors may also be operated as generators, in order for the electric motors to generate braking force when required. The use of electrical machines **120** to supply a negative force is known as regenerative braking.

Furthermore, each unit **110** may comprise one or more sets of service brakes **140.** The service brakes **140** of a unit **110** can supply a negative (braking) force. The service brakes **140** may be, for example, frictional brakes such as pneumatic brakes. Pneumatic brakes use a compressor to fill the brake with air, which may be powered by the batteries **130.** In some examples, the service brakes may be electro-mechanical or hydraulic brakes. The energy recovered from regenerative braking can be stored in the batteries **130,** and so regenerative braking by the electrical machines **110** may generally be preferred over using service brakes.

The ICE, electrical machines **120** and service brakes **140** are considered as actuators of the vehicle combination **100.** Other actuators may also be present. For example, steering actuators **150,** such as steering servo arrangements, may be provided, and may be implemented as electro-hydraulic actuators. Each actuator in a given unit **110** may be given an index k, and the total number of actuators in a given unit **110** is designated *m.* The electrical machines **120,** service brakes **140,** and steering actuators **150** are shown as being on respective sides of each vehicle unit **110,** but it will be appreciated that each axle and/or wheel may have an associated electrical machine **120,** set of service brakes **140,** and/or set of steering actuators **150.**

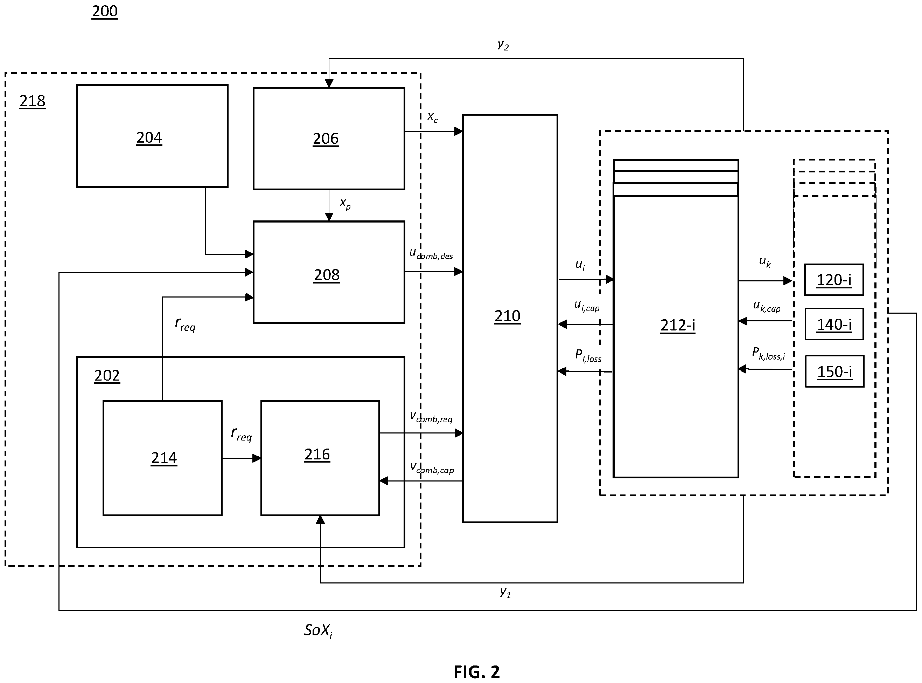

**FIG. 1** also shows the forces of the vehicle combination **100.** Examples of global forces of the vehicle combination **100** as a whole may include a total longitudinal/axial force *F_{x.tot}* and a total lateral/radial force *F_{y,tot}.* Examples of unit forces of the vehicle combination **100** may include a longitudinal/axial force *F_{x.i}*, a lateral/radial force *F*_{*y*,*i*}, and/or one or more yaw moments *Mz,;* for the respective vehicle units **110.** In order to control motion of a vehicle combination **100,** the forces of the vehicle combination **100** must be determined and resolved. This may be achieved by a control system **200** (shown in **FIG. 2**) of the vehicle combination **100** that determines control data based on a requested reference input and certain operating conditions of the vehicle combination **100.**

**FIG. 2** schematically shows, in terms of functional blocks, an example control system **200** for a vehicle, such as the vehicle combination **100.** The control system **200** serves to perform various functions of the vehicle combination **100,** such as power management and motion coordination. The control system **200** comprises a target generator **202,** a tactical layer **204,** a state estimator **206,** an energy manager **208,** a combination control allocator **210** and a plurality of unit control allocators **212.** The various modules may e.g. be implemented as code running on a processing circuitry, or similar. The various modules may comprise processing circuitry configured to implement various operations disclosed below. The various modules may may include a memory storing instructions that, when executed by the processing circuitry, cause the processing circuitry to perform the various operations. The various modules may be communicatively connected or connectable to each other, for example as known in the art.

The purpose of the target generator **202** is to determine a requested input *r_{req}* and a virtual control input *v_{comb,req}* for the vehicle combination **100.** The requested input *r_{req}* is determined based on an input related to a manoeuvre for the vehicle combination **100** and represents a requested movement of the vehicle combination **100.** The virtual combination control input *v_{comb,req}* is determined based on the requested reference input *r_{req}* and a motion capability *v_{comb,cap}* for the vehicle combination **100.** The target generator **202** comprises a path planner/controller **214** and a force generator **216.**

In particular, the target generator **202** may receive an input related to a manoeuvre for the vehicle combination **100.** The manoeuvre may be, for example, straight-line driving, cornering, braking and the like. The target generator **202** may receive data from, for example, a steering wheel and/or gas/brake pedal of the combination **100,** indicating that the driver (or some other system of the vehicle combination **100**) wants to change the direction and/or the speed of the vehicle combination **100** in a certain way. In some examples, the data may originate from elsewhere, for example any other system that may provide some indication of how the overall forces of the vehicle combination **100** are to be influenced (e.g. steered, propelled or braked). For example, the data may originate from a lane assist system, a lane following system, an emergency steering system, an emergency braking system, an automated or semi-automated drive system. Based on this input, the target generator **202** outputs a requested reference input *r_{req}.* In particular, the path planner/controller **214** determines the requested reference input *r_{req}.* The requested reference input *r_{req}* may comprise at least one of a longitudinal acceleration *aₓ* of the vehicle combination **100** as a whole or of a unit **110** of the vehicle combination **100** (for example the unit **110** comprising the combination control allocator **210**), a longitudinal velocity *vₓ₁* of the tractor unit **110-1,** a lateral velocity *v_{y1}* of the tractor unit **110-1,** a yaw rate *ω_{zi}* of at least one unit **110** of the vehicle combination **100,** and a steering angle *δ_{f, req}* of the tractor unit **110-1.**

The virtual combination control input *v_{comb,req}* is determined based on the requested input *r_{req}.* In particular, the force generator **216** determines the virtual combination control input *v_{comb,req}.* The virtual combination control input *v_{comb,req}* may include requested motion parameters for the vehicle combination **100.** In particular, the forces *F_{tot,req}* and/or moments *M_{z,tot,req}* that need to be applied to the vehicle combination **100** as a whole in order to follow the requested input *r_{req}* are determined. The requested motion parameters included in the combination virtual control input *v_{comb,req}* of the vehicle combination **100** may comprise at least one of a longitudinal force *F_{x,tot,req}* of the vehicle combination **100,** a lateral force *F_{y,tot,req}* of the vehicle combination **100,** a longitudinal coupling force *F_{cxi,req}* between consecutive units **110,** and a lateral coupling force *F_{cyi,req}* between consecutive units **110.** These make up the total force to be applied *F_{tot,req}* for the vehicle combination **100.** The requested motion parameters included in the combination virtual control input *v_{comb,req}* of the vehicle combination **100** may comprise a yaw moment *M_{z,i,req}* for one or more units **110.**

The virtual combination control input *v_{comb,req}* may also be determined based on state information *y₁* from the different units **110** of the vehicle combination **100** and a motion capability *v_{comb,cap}* for the vehicle combination **100.** The state information *y₁* may include information from sensors of the vehicle combination **100** such as wheel speed sensors, inertial measurement units, articulation angle sensors and the like. The motion capability *v_{comb,cap}* of the vehicle combination **100** may describe the limits of motion parameters for safe operation of the vehicle combination **100.** The motion capability *v_{comb,cap}* may comprise at least one of a longitudinal force *F_{x.tot,cap}* of the vehicle combination **100,** a lateral force *F_{y,tot,cap}* of the vehicle combination **100,** and a yaw moment *M_{z,i,cap}* for one or more units **110.**

The virtual combination control input *v_{comb,req}* may be determined based on a vehicle model. The vehicle model can be any suitable model, for example a model known in the art. The model can be based on real tests, computer model simulations, a machine-learning model, or other suitable means known in the art. The vehicle model may provide motion prediction of the vehicle combination **100** by looking at previous steering input and acceleration input. The prediction may include instabilities such as understeer or rollover risk, for example within a one-second horizon. The model may be, for example, a single-track model, i.e., left and right wheels on a given axle are considered together. The real units can have axle groups with several axles, but in the model they are considered together. A tyre model can be used in combination with the vehicle model. The tyre model may take into account the cornering stiffness of the tyres of the vehicle combination **100.**

The tactical layer **204** is responsible for ensuring that the trajectory for the whole combination **100** is obstacle free and collision free. The tactical layer **204** may also provide a requested reference input in an autonomous driving case. The tactical layer **204** may also include predictive energy management, including battery targets, capabilities and statuses that determine how the energy sources of the vehicle combination **100** should be used for a whole mission.

In some examples, the tactical layer **204** can decide on state of charge (SoC) targets for the batteries **130** of the vehicle combination **100** as a function of distance, in some cases considering slope changes, etc. For example, the tactical layer **204** can request the battery **130** of a unit **110** having a higher SoC be drained for an uphill slope, as it can foresee that batteries **130** of all units **110** can be charged fully with regenerative braking at a following downhill slope. In some examples, an SoC controller (not shown) can calculate weighting factors for SoC targets. In some examples, the tactical layer **204** can send targets for the state of energy rate (*SóE*) directly to the combination control allocator **210.**

Furthermore, the tactical layer **204** can request the transfer of energy from one unit 110 to another by means of propulsion in one unit **110** and regenerative braking in the other (as explained in WO 2021/180300 A1 in the name of Volvo Truck Corporation). In another example, the tactical layer **204** requests the battery **130** of a unit **110** to be drained faster than the battery **130** of another unit **110** based on the number of available chargers in a following charge station or due to equalizing the charging time of all units **110** or minimizing the total charging time at the charging station.

The state estimator **206** is responsible for processing state information *y₂* from the different units **110** of the vehicle combination **100.** For example, the state estimator **206** may receive information from sensors of the vehicle combination **100** such as wheel speed sensors, inertial measurement units, articulation angle sensors and the like and use this information to determine states for the vehicle combination **100** and the various units. The state estimator **206** may then output unit-specific state information *xₚ* to the energy manager **208** and unit-specific state information *x_{c}* to the combination control allocator **210.**

The energy manager **208** determines a power split between the different units **110** of the vehicle combination **100.** The energy manager **208** may also determine a power split within each unit **110,** meaning how the power demand is divided between the actuators (for example, the ICE, the electrical machines **120,** service brakes **140,** and/or steering actuators **150**) of the unit **110.** Inputs to the energy manager **208** include the requested reference input *r_{req}* from the target generator **202** and the statuses *SoX* of the batteries **130** of the vehicle combination **100.** The energy manager **208** determines a power allocation and an associated power allocation input *u_{comb,des}.* The power split may be determined based on the state of energy rate (*SȯE*) for each unit **110** and/or the longitudinal part of the requested force for the unit's propulsion system *F_{xpi,req}.* The energy manager **208** may consider factors that affect long-term energy consumption, such as road slopes, SoC states, charger locations, and the like, and determine power behavior as a function of the energy over time. The energy manager **208** may also be configured as a power manger. For example when a time horizon is considered, it may handle energy. When instantaneous values are considered, it may handle power.

Based on these values, the control allocators **210, 212** may determine control data that meets the requested global forces of the vehicle combination **100** to meet certain constraints, such as power management (optimising battery usage) and safety constraints (ensuring that the trajectory for the whole combination **100** is obstacle free and collision free). In particular, the control allocators **210, 212** determine how various actuators (for example, the ICE, the electrical machines **120,** service brakes **140,** and/or steering actuators **150**) of the vehicle combination **100** are to be controlled in order to generate requested global forces of the vehicle combination **100** as a whole. The combination control allocator **210** and the various unit specific control allocators **212** together form a distributed control allocation system for the vehicle combination **100.** In this system, the control allocation is performed on multiple levels, i.e. first on a level of the vehicle combination **100** as a whole, and then on a level of each vehicle unit **110** individually.

The combination control allocator **210** transforms the virtual combination control input *v_{comb,req}* from the target generator **202** into a true control input *u_{comb}* for the vehicle combination **100,** describing appropriate motion parameters for each unit **110.** The combination control allocator **210** also transforms the true combination control input *u_{comb}* into requested unit control inputs *uᵢ* describing the forces that each respective unit **110** is to produce in order to provide the true control input *u_{comb}* of the vehicle combination **100.** The true control input *u_{comb}* of the vehicle combination **100** comprises the force *F* to be applied for the vehicle combination **100.** The requested unit control inputs *uᵢ* may comprise a virtual force control input for the unit's propulsion system *F_{pi,req}* and a virtual force control input for the unit's braking system *F_{bi,req}.*

The unit control allocators **212** comprise a specific control allocator **212** for each unit **110** of the vehicle combination **100.** The unit-specific virtual control inputs *uᵢ* that are output from the combination control allocator **210** are transformed into unit-specific true control inputs *uₖ*, describing actual actuator commands by the unit-specific control allocators **212.** For example, the unit-specific control allocators **212** map the forces and moments of each unit **110** into the steering and drive/brake torques to be applied at the wheels of each unit **110.** To do this, the unit control allocators **212** may determine virtual force control inputs for the individual actuators of the unit's different systems: *F_{pk,req}* for the actuators of the propulsion system, and *F_{bk,req}* for the actuators of the braking system. The unit control allocators **212** then determine the unit-specific true control inputs *uₖ* accordingly, which comprise a true force control input for the unit's propulsion system *Fₚᵢ* and a true force control input for the unit's braking system *F_{bi}*. These may respectively include true force control inputs for the individual actuators of a unit: *Fₚₖ* for the unit's propulsion actuators and *F_{bk}* for the unit's braking actuators.

In some examples, each unit **110** may be capable of estimating its own capabilities *u_{i,cap}*, e.g. how much and/or how fast the unit can move at a current time instant. The unit capabilities comprise a force capability for its propulsion system *F_{pi,cap}* and a force capability for its braking system *F_{bi,cap}.* This may be based on an actuator capability *u_{k,cap}* for each actuator, e.g. how much and/or how fast the unit can move at a current time instant. The actuator capabilities comprise a force capability for the actuators *F_{pk,cap}* during propulsion and a force capability for the actuators *F_{bk,cap}* during braking. The actuators of each unit **110** may provide an actuator capability *u_{k,cap}* to the respective unit control allocator **212-i,** which provides a unit capability *u_{i,cap}* to the combination control allocator **210.** The unit capabilities *u_{i,cap}* may also comprise capabilities of the power input/output of the batteries **130.**

Each unit **110** may also be capable of estimating its own power losses *P_{i,loss}.* The unit power losses *P_{i,loss}* comprise a power loss for its propulsion system *P_{pi,loss}* and a power loss for its braking system *P_{bi,loss}.* This may be based on actuator power losses *P_{k,loss,i}* for each actuator in the unit as well as other power losses in the unit **110,** such as power losses in the batteries and the drivetrain. The actuator power losses *P_{k,loss,i}* comprise a power loss for propulsion actuators *P_{pk,loss,i}* (e.g. electrical machines **120,** ICE, and/or other propulsion sources) and a power loss for braking actuators *P_{bk,loss,i}* (e.g. electrical machines **120** and/or service brakes **140**)**.** The actuators of each unit **110** may provide the actuator power losses *P_{k,loss,i}* to the respective unit control allocator **212-i,** which provides unit power losses *P_{i,loss}* to the combination control allocator **210.**

Typically, the combination control allocator **210** of **FIG. 2** is implemented in the controller of the tractor unit **110-1,** while a controller of each unit **110** comprises a specific unit control allocator **212.** In such an implementation, the controller of the tractor unit **110-1** determines the unit-specific virtual control inputs *uᵢ* for each respective unit **110,** and may be known as the primary controller. The controllers of the trailing units **110-2** to **110-n,** each comprising a respective unit control allocator **212,** then provide unit-specific true control inputs *uₖ* as actuator commands for the actuators of the respective unit **110.** In this way, the combination control allocator **210** and the various unit specific control allocators **212** together form a distributed control allocation system for the vehicle combination **100.** Control allocation may therefore be performed on multiple levels, i.e. first on a level of the vehicle combination **100** as a whole, and then on a level of each vehicle unit **110** individually. The target generator **202,** tactical layer **204,** state estimator **206,** and energy manager **208** may be collectively known as a motion and energy manager **218.** The motion and energy manager **218** may be implemented remotely from the vehicle combination **100** or on board the vehicle combination **100,** for example in the primary controller. If these modules are located remotely from the vehicle combination **100,** they may be communicatively coupled to the vehicle combination **100.**

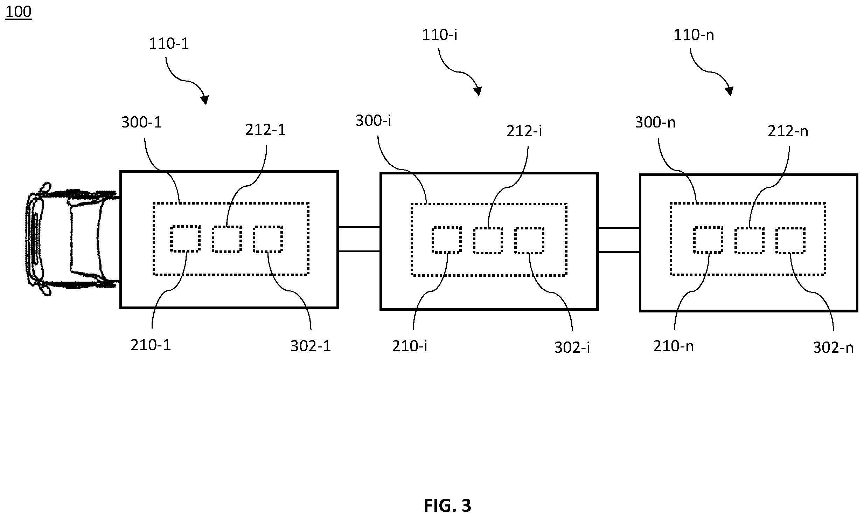

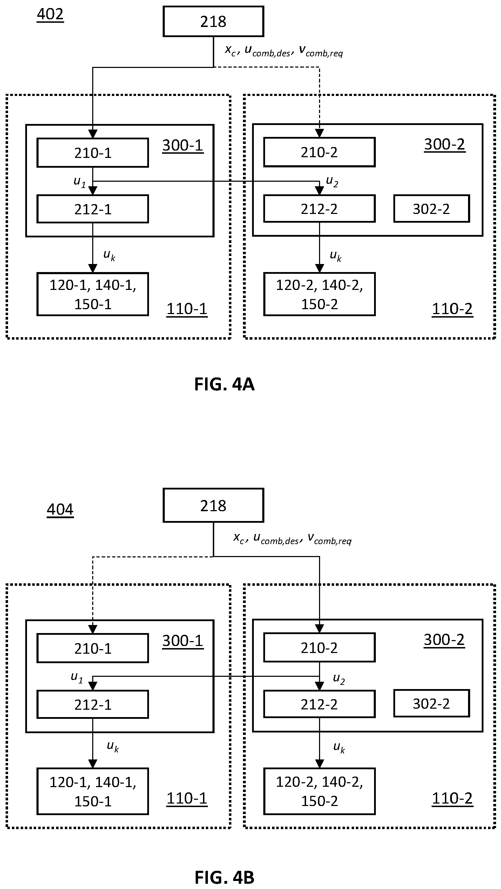

**FIG. 3** schematically shows an example implementation of the control system **200** in a vehicle combination **100** according to the present disclosure. Each unit **110** of the vehicle combination **100** has a respective controller **300,** including a respective unit control allocator **212.** The tractor unit controller **300-1** also comprises a combination control allocator **210-1,** and may be considered as the primary controller. In the example of **FIG. 3****,** at least one trailing unit controller **300-2** to **300-n** comprises an instance of the combination control allocator **210.** As such, two or more of the controllers **300** of the vehicle combination **100** (for example, the tractor unit controller **300-1** and one or more of the trailing unit controllers **300-2** to **300**-**n**) comprise an instance of the combination control allocator **210.** This provides redundancy for the functions of the primary controller, as will be discussed below. While the primary controller is explained above as being tractor unit controller **300-1,** it will be appreciated that the primary controller, including an instance of the combination control allocator **210,** may be provided by the controller **300** of any unit **110** of the vehicle combination **100.** This configuration allows the control system **200** to operate in two different modes of operation, as will be explained in relation to **FIGs. 4A** and **4B****.**

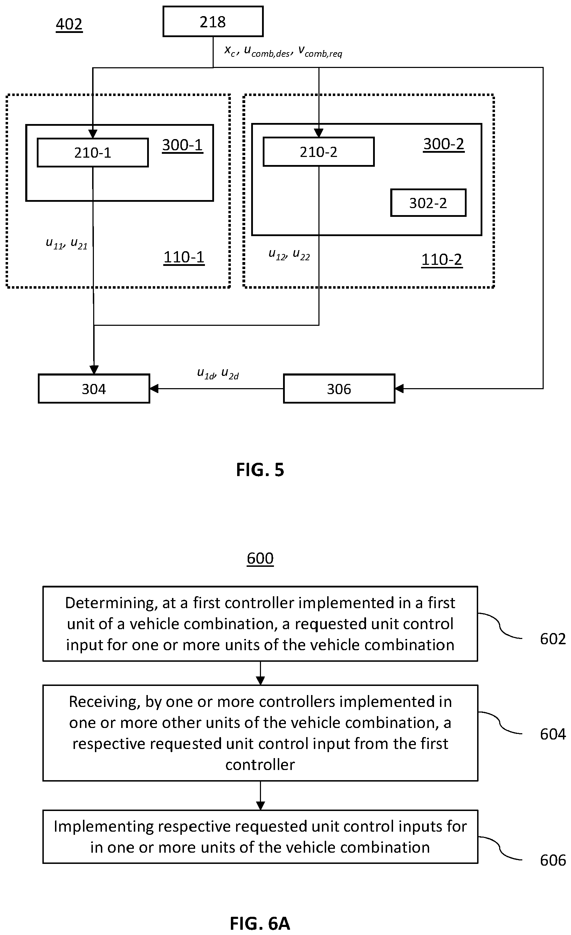

As shown in **FIG. 3****,** the control system **200** may also comprise one or more monitors **302.** For example, a respective monitor **302** may be implemented in one of more of the controllers **300** of the vehicle combination **100.** In some examples, the monitor **302** may be provided remotely from the vehicle combination **100,** but communicatively coupled to the vehicle combination **100.** The monitor **302** is configured to monitor operation of the primary controller and/or the unit in which the primary controller is located, and detect a fault. For example, a monitor **302** may receive or determine one or more operational parameters related to the primary controller and/or its unit, and compare these to known or expected values. Operation of the monitor **302** will be described in more detail in relation to **FIG. 5****.**

In some examples, one or more of the controllers **300** may also comprise unit specific control allocators **212** for one or more other units **110.** For example, the secondary controller **300-2** may comprise an instance of the unit specific control allocator **212-1** for the first unit **110-1.** This may enable unit-level control from another unit **110** of the vehicle combination (i.e. determination of unit-specific true control inputs *uₖ*, for another unit **110**)**.**

**FIGs. 4A** and **4B** schematically show two different modes of operation **402, 404** for the control system **200.** The first mode of operation **402** may be known as a standard mode, normal mode, default mode or the like, and be employed during normal operation of the vehicle combination **100.** The second mode of operation **404** may be triggered by detection of a fault associated with the primary controller and/or its unit. Alternatively, the second mode of operation **404** may be activated in another manner, for example via an input an operator of the vehicle combination **100,** such as in the case that the unit of the primary controller is switched out for another unit. The second mode of operation **404** may be known as a secondary mode, backup mode, fault mode, or the like.

These modes of operation **402, 404** are illustrated in **FIGs. 4A** and **4B** in the context of a vehicle combination **100** comprising a first unit **110-1** and a second unit **110-2,** for example a tractor unit **110-1** and a trailing unit **110-2.** As discussed above, the units **110-1, 110-2** have respective controllers **300-1, 300-2** and actuators, for example in the form of electrical machines **120-1, 120-2,** service brakes **140-1, 140-2,** and steering actuators **150-1, 150-2.** Each controller **300-1, 300-2** comprises a respective instance of the combination control allocator **210-1, 210-2** as well as a respective unit control allocator **212-1, 212-2.** The controller **300-2** of the second unit **110-2** also comprises a monitor **302-2.** In this configuration, the controller **300-1** of the first unit **110-1** may be considered as the primary controller, while the controller **300-2** of the second unit **110-2** may be considered as a secondary controller. The target generator **202,** tactical layer **204,** state estimator **206,** and energy manager **208** are implemented remotely from the vehicle combination **100** and are communicatively coupled to the vehicle combination **100,** in particular the controllers **300-1, 300-2.**

It will be appreciated that the configuration illustrated in **FIGs. 4A** and **4B** is an example only, and different combination of units **110,** controllers **300,** and monitors **302** can be used to implement the control system **200** in a vehicle combination **100.** For example, it will be appreciated that these modes of operation **402, 404** may be implemented in vehicle combinations **100** comprising more than two units. Furthermore, the primary controller may not be in the first (or tractor) unit **110-1**), but in any other suitable unit **110** of the vehicle combination **100.** Furthermore, the motion and energy manager **218** may be implemented in any suitable controller **300,** such as the primary controller. The combination control allocator **210** may also be implemented remotely, for example co-located with **202-208.**

**FIG. 4A** schematically shows the first mode of operation **402** for the control system **200.** In the first mode of operation **402,** the primary controller **300-1** receives data from the motion and energy manager **218** as discussed in relation to **FIG. 2****,** such as the virtual combination control input *v_{comb,req},* the unit-specific state information *x_{c}*, and the power allocation input *u_{comb,des}.* In particular, these data are received by the combination control allocator **210-1** of the primary controller **300-1.** The combination control allocator **210-1** of the primary controller **300-1** then provides requested unit control inputs *u₁*, *u₂* to the unit control allocator **212-1, 212-2** of each unit **110-1, 110-2.** The unit control allocators **212-1, 212-2** then provide unit-specific true control inputs *uₖ*, describing actual actuator commands, to the actuators of the respective unit (e.g. the electrical machines **120-1, 120-2,** service brakes **140-1, 140-2,** and steering actuators **150-1, 150**)**.**

In the first mode of operation **402,** the combination control allocator **210-2** of the secondary controller **300-2** may also receive data from the motion and energy manager **218,** such as the virtual combination control input *v_{comb,req},* the unit-specific state information *x_{c}*, and the power allocation input *u_{comb,des}.* However, in the first mode of operation **402,** the combination control allocator **210-2** of the secondary controller **300-2** may take no further action.

**FIG. 4B** schematically shows the second mode of operation **404** for the control system **200.** In the second mode of operation **404,** the secondary controller **300-2** receives data from the motion and energy manager **218,** such as the virtual combination control input *v_{comb,req},* the unit-specific state information *x_{c}*, and the power allocation input *u_{comb,des}.* In particular, these data are received by the combination control allocator **210-2** of the secondary controller **300-2.** The combination control allocator **210-2** of the secondary controller **300-2** then provides the requested unit control inputs *u₁*, *u₂* to the unit control allocator **212-1, 212-2** of each unit **110-1, 110-2.** The unit control allocators **212-1, 212-2** then provide unit-specific true control inputs *uₖ*, describing actual actuator commands, to the actuators of the respective unit (e.g. the electrical machines **120-1, 120-2,** service brakes **140-1, 140-2,** and steering actuators **150-1, 150**)**.** As such, in the second mode of operation **404,** the secondary controller **300-2** performs the role usually performed (in the first mode of operation **402**) by the primary controller **300-1.**

In the second mode of operation **404,** the combination control allocator **210-1** of the primary controller **300-1** may also receive data from the motion and energy manager **218,** such as the virtual combination control input *v_{comb,req},* the unit-specific state information *x_{c}*, and the power allocation input *u_{comb,des}.* However, in the second mode of operation **404,** the combination control allocator **210-1** of the primary controller **300-1** may take no further action, for example as there is a fault associated with the primary controller **300-1** and/or the first unit **110-1.**

As discussed above, in some examples, the secondary controller **300-2** may comprise an instance of the unit specific control allocator **212-1** for the first unit **110-1.** This may enable the secondary controller **300-2** to provide a unit-specific true control inputs *u₁* to the actuators of the first unit **110-1.** This may also be useful in the case of complete failure of the primary controller **300-1** and/or the first unit **110-1,** and in cases where the combination control allocator **210** is implemented remotely from the vehicle combination **100** and the controllers only comprise unit specific control allocators **212.**

These two modes of operation provide redundancy for the functions of the primary controller **300-1.** By implementing the secondary controller **300-2** in a different unit from the primary controller **300-1,** it can be used independent of the status of the primary controller **300-1** and the first unit **110-1** (e.g. in case of failure of the primary controller **300-1** or the first unit **110-1**). Another advantage of this approach is that the combination control allocator **210-2** can be implemented in an existing controller **300-2,** which may already be implemented in the second unit **110-2** in order to provide the unit control allocator **212-2.** The controller **300-2** can therefore be used as a secondary controller for the vehicle combination **100,** and take over in case of a fault with the primary controller **300-1,** thus negating the need for the additional infrastructure required for an additional independent back-up controller. It will be appreciated that, in a vehicle combinations **100** comprising more than two units, any or all of the trailing units may comprise a controller **300** that can be configured as a secondary controller.

As discussed above, the second mode of operation **404** may be triggered by detection of a fault associated with the primary controller **300-1** and/or the first unit **110-1.** The fault detection may be performed by the monitor **302-2.**

In some examples, the monitor **302-2** is configured to detect the fault by comparing the requested unit control input *u₂* for the second unit **110-2** to the data received from the motion and energy manager **218** (such as the virtual combination control input *v_{comb,req},* the unit-specific state information *x_{c}*, and the power allocation input *u_{comb,des}*). For example, by comparing the requested unit control input *u₂* to the virtual combination control input *v_{comb,req},* the monitor **302-2** may be able to determine a significant difference between the values. In some examples, the monitor **302-2** may be able to receive requested unit control inputs for other units **110,** and make a comparison to the virtual combination control input *v_{comb,req}* on a combination level. If the comparison indicates that the requested unit control input *u₂* for the second unit **110-2** is outside a threshold value of that expected from the virtual combination control input *v_{comb,req},* then it can be determined that there is a fault with the primary controller **300-1** and/or the first unit **110-1.**

In some examples, the monitor **302-2** is configured to detect the fault by comparing the requested unit control input *u₂* for the second unit **110-2** to one or more limits, for example limits defining safe operation of the vehicle combination **100.** If the comparison indicates that the requested unit control input *u₂* for the second unit **110-2** is outside a predetermined limit, then it can be determined that there is a fault with the primary controller **300-1** and/or the first unit **110-1.**

In some examples, the monitor **302-2** is configured to detect the fault by determining covariance values associated with the primary controller **300-1** and/or the first unit 110-1. For example, the monitor **302-2** may configured to determine covariance values that describe the uncertainty of data received from the primary controller **300-1.** These values may be determined in any suitable manner known in the art. If the covariance values outside a threshold, then it can be determined that there is a fault with the primary controller **300-1** and/or the first unit **110-1.**

In some examples, the monitor **302-2** may be configured to receive fault data related to the primary controller and/or its unit. The fault data may be data from a smoke detector indicating there is a fire in the primary controller **300-1** and/or the first unit **110-1.** The fault data may be data indicating that a battery associated with the primary controller **300-1** is depleted. The fault data may relate to a fault in the communication line between the first unit **110-1** and the second unit **110-2,** such as an absence or delay in communication between the first unit **110-1** and the second unit **110-2.** Other types of fault that can be detected directly will be readily envisaged by the skilled person.

**FIG. 5** schematically shows another example implementation of the control system **200** in a vehicle combination **100** according to the present disclosure. The example of **FIG. 5** corresponds generally to that of **FIGs. 4A** and **4B****,** although the control system **200** further comprises a comparator **304** and an optional dummy controller **306** that can be used to detect a fault. The comparator **304** and/or the dummy controller **306** may be implemented remotely from the vehicle combination **100,** for example co-located with the motion and energy manager **218,** or may be implemented together or separately in one or more suitable units **110** of the vehicle combination **100.** The control system **200** is shown in the first mode of operation **402.** For example, the comparator **304** and/or the dummy controller **306** may be implemented in the monitor **302-2.**

In the example of **FIG. 5****,** in the first mode of operation **402,** the combination control allocator **210-2** of the secondary controller **300-2** also receives data from the motion and energy manager **218** (such as the virtual combination control input *v_{comb,req},* the unit-specific state information *x_{c}*, and the power allocation input *u_{comb,des}*). In particular, these data are received by the combination control allocator **210-2** of the secondary controller **300-2.** However, in this example, the combination control allocator **210-2** of the secondary controller **300-2** also determines unit control inputs *u₁₂*, *u₂₂.* This can be considered as a predicted unit control input for first unit **110-1** and the second unit **110-2.** The requested unit control inputs *u₁₁*, *u₂₁* from the primary controller **300-1** (which are the same as the requested unit control inputs *u₁*, *u₂* in **FIG. 4A**) and the predicted unit control input *u₁₂*, *u₂₂* from the secondary controller **300-2** are then provided to the comparator **304.** The comparator **304** is configured to compare the requested unit control input from the primary controller **300-1** to the predicted unit control input from the secondary controller **300-2.** If there is a difference between the two sets of requested unit control inputs, for example if they differ by a threshold amount, it can be determine that there is a fault. The fault may be associated with the primary controller **300-1** and/or the secondary controller **300-2.** This may be further investigated to determine which controller has the fault, for example based on sensor signals or the like.

In some examples, the control system **200** further comprises a dummy controller **306.** In the first mode of operation **402,** a dummy controller **306** also receives data from the motion and energy manager **218** (such as the virtual combination control input *v_{comb,req},* the unit-specific state information *x_{c}*, and the power allocation input *u_{comb,des}*) and determines dummy unit-specific virtual control inputs *u_{1d}*, *u_{2d}.* These can be considered as a dummy unit control input for first unit **110-1** and the second unit **110-2.** The dummy unit control input *u_{1d}*, *u_{2d}* is then provided to the comparator **304** along with the requested unit control input *u₁₁*, *u₂₁* from the primary controller **300-1** and the predicted unit control input *u₁₂*, *u₂₂* from the secondary controller **300-2.** The comparator **304** is configured to compare the requested unit control input from the primary controller **300-1,** the predicted unit control input from the secondary controller **300-2,** and the dummy unit control input from the dummy controller **306.** Based on this comparison, it can be determined which of the primary controller **300-1** and/or the secondary controller **300-2** has a fault. For example, if the requested unit control input from the primary controller **300-1** is further from the dummy unit control input from the dummy controller **306** than the predicted unit control input from the secondary controller **300-2,** it can be determined that the primary controller **300-1** has a fault. On the other hand, if the predicted unit control input from the secondary controller **300-2** is further from the dummy unit control input from the dummy controller **306** than the requested unit control input from the primary controller **300-1,** it can be determined that the secondary controller **300-2** has a fault. Similarly, the requested unit control input from the primary controller **300-1** and/or the predicted unit control input from the secondary controller **300-2** is above a threshold difference from the dummy unit control input from the dummy controller **306,** it can be determined that the controller at issue (in some cases, both controllers **300-1, 300-2**) has a fault.

In some examples, the control system **200** further comprises an emergency controller configured to implement a minimum risk manoeuvre in response to detection of a fault associated with one or more other controllers. For example, the emergency controller may be configured to implement a manoeuvre to stop the vehicle combination **100** at a safe place. The emergency controller could be triggered, for example, in cases where the motion and energy manager **218** is implemented in a unit of the vehicle combination **100** that experiences critical failure (e.g. fire) and cannot even generate or receive a reference input. This manoeuvre could be hard coded into the controller of another unit of the vehicle combination **100.**

**FIG. 6A** is a flow chart of a computer-implemented method **600** according to an example. The method **600** corresponds to the first mode of operation **402** shown in **FIG. 4A****.** The method **600** may be implemented in the control system **200,** as discussed above.

At **602,** a requested unit control input *uᵢ* for one or more units **110** of the vehicle combination **100** is determined. The requested unit control input *uᵢ* is determined at the primary controller. The primary controller may be, for example, the controller **300-1** of the first unit **110-1,** although the primary controller may be implemented in any suitable unit **110** of the vehicle combination **100.** As discussed above, the requested unit control input *uᵢ* is determined based on a reference input *r_{req}* representing a requested movement of the vehicle combination. For example, the primary controller may receive data from the motion and energy manager **218,** such as the virtual combination control input *v_{comb,req},* the unit-specific state information *x_{c}*, and the power allocation input *u_{comb,des},* or the motion and energy manager **218** may be implemented in the primary controller.

At **604,** one or more controllers implemented in one or more other units **110** of the vehicle combination **100** receive a requested unit control input *uᵢ* for their respective unit from the primary controller. For example, the controller **300-2** of the second unit **110-2** unit may receive a requested unit control input *u₂* from the controller **300-1** of the first unit **110-1.** It will be appreciated that each unit **110** of the vehicle combination **100** may receive a respective requested unit control input *uᵢ* from the primary controller.

At **606,** the controllers implement their respective requested unit control inputs *uᵢ* in their respective unit **100.** For example, the one or more other controllers implement the respective requested unit control inputs *uᵢ* received at **604** in their respective unit **100** (e.g. the controller **300-2** may implement the requested unit control input *u₂* in the second unit **110-2**). It will be appreciated that each controller **300** of the vehicle combination **100** may implement a respective requested unit control input *uᵢ* in a respective unit **110.** In the case that the primary controller is associated with a unit **110** of the vehicle combination **100,** it implements the requested unit control input for that unit. For example, the controller **300-1** may implement a requested unit control input *u₁* in the first unit **110-1.**

As mentioned above, the method **600** corresponds to the first mode of operation **402** shown in **FIG. 4A****,** and therefore corresponds to standard, normal, or default operation of the vehicle combination **100.** The method **600** is implemented until a fault is detected in the primary controller and/or its unit, or until the second mode of operation **404** is otherwise activated, for example by an operator of the vehicle combination **100.**

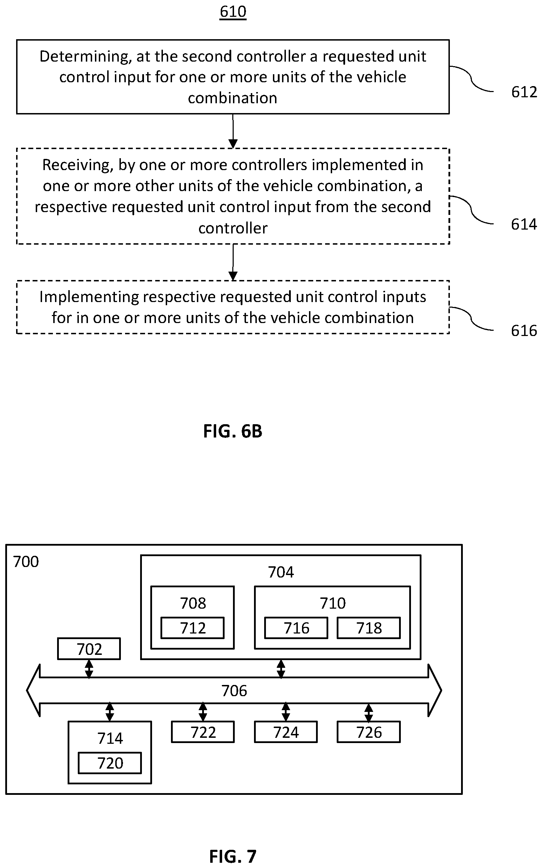

**FIG. 6B** is a flow chart of another computer-implemented method **610** according to an example. The method **610** corresponds to the second mode of operation **404** shown in **FIG. 4B****.** The method **600** may be implemented in the control system **200,** as discussed above.

At **612,** a requested unit control input *uᵢ* for one or more units **110** of the vehicle combination **100** is determined, but now at the secondary controller. The secondary controller may be, for example, the controller **300-2** of the second unit **110-2,** although the secondary controller may be implemented in any suitable unit **110** of the vehicle combination **100.** As discussed above, the requested unit control input *uᵢ* is determined based on a reference input *r_{req}* representing a requested movement of the vehicle combination. For example, the secondary controller may receive data from the motion and energy manager **218,** such as the virtual combination control input *v_{comb,req},* the unit-specific state information *x_{c}*, and the power allocation input *u_{comb,des}*, or the motion and energy manager **218** may also be implemented in the secondary controller.

At **614,** one or more controllers implemented in other units **110** of the vehicle combination **100** receive a requested unit control input *uᵢ* for the respective unit from the secondary controller. For example, the controller **300-1** of the first unit **110-1** unit may receive a requested unit control input *u₁* from the controller **300-2** of the second unit **110-2.** It will be appreciated that each unit **110** of the vehicle combination **100** may receive a respective requested unit control input *uᵢ* from the secondary controller.

**616,** the controllers implement their respective requested unit control inputs *uᵢ* in their respective unit **100.** For example, the one or more other controllers implement the respective requested unit control inputs *uᵢ* received at **614** in their respective unit **100** (e.g. the controller **300-1** may implement the requested unit control input *u₁* in the first unit **110-1**). The secondary controller also implements the requested unit control input *u₂* in the second unit **110-2.** It will be appreciated that each unit **110** of the vehicle combination **100** may implement a respective requested unit control input *uᵢ* in a respective unit **110.** In this way, the secondary controller takes over the functions of the primary controller when in the second mode of operation **404,** for example if a fault is detected in the primary controller and/or its unit.

In some examples, the secondary controller and/or another controller may comprise an instance of a unit specific control allocator **212** for another unit **110.** This may enable the unit-specific true control inputs *uₖ* to be provided the actuators of each unit **110,** even in the case of failure of that unit's controller. This may also be useful in the case where the combination control allocator **210** is implemented remotely from the vehicle combination **100,** and the controllers only comprise unit specific control allocators **212.**

The methods **600** and **610** provide an approach to vehicle motion management that provides redundancy for the functions of a primary controller. By implementing a secondary controller in a different unit from the primary controller, it can be used independent of the status of the primary controller and its unit (e.g. in case of failure). Another advantage of this approach is that these functions can be provided by a controller that may already be implemented in the vehicle combination, thus negating the need for the additional infrastructure required for an additional independent back-up controller.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (200) for a vehicle combination (100), the computer system (200) comprising processing circuitry configured to implement a first controller (300, 300-1) implemented in a first unit (110, 110-1) of the vehicle combination (100), the first controller (300, 300-1) configured to, in a first mode of operation (402), determine a requested unit control input for one or more units (110) of the vehicle combination (100) based on a reference input representing a requested movement of the vehicle combination (100), and a second controller (300, 300-2) implemented in a second unit (110, 110-2) of the vehicle combination (100), the second controller (300, 300-2) configured to, in the first mode of operation (402), receive a requested unit control input for the second unit (110, 110-2) from the first controller (300, 300-1), and implement the requested unit control input for the second unit (110, 110-2) in the second unit (110, 110-2), and, in a second mode of operation (404), determine a requested unit control input for one or more units (110) of the vehicle combination (100) based on the reference input.
Example 2: The computer system (200) of example 1, wherein the second mode of operation (404) is triggered by detection of a fault associated with the first controller (300, 300-1) and/or the first unit (110, 110-1).
Example 3: The computer system (200) of example 2, wherein the processing circuitry is further configured to implement a monitor (302, 302-2) configured to monitor operation of the first controller (300, 300-1) and/or the first unit (110, 110-1) and detect the fault.
Example 4: The computer system (200) of example 3, wherein the monitor (302, 302-2) is configured to detect the fault by comparing the requested control input from the first controller (300, 300-1) with one or more requested unit control inputs and/or one or more limits.
Example 5: The computer system (200) of example 3 or 4, wherein the monitor (302, 302-2) is configured to detect the fault by determining sensor values and/or covariance values associated with one or more units (110) of the vehicle combination (100).
Example 6: The computer system (200) of any of examples 3 to 5, wherein the monitor (302, 302-2) is configured to detect the fault by determining sensor values and/or covariance values associated with one or more units (110) of the vehicle combination (100).
Example 7: The computer system (200) of any preceding example, wherein, in the second mode of operation, the second controller (300, 300-2) is configured to implement a requested unit control input for the first unit (110, 110-1) in the first unit (110, 110-1).
Example 8: The computer system (200) of any preceding example, wherein the processing circuitry is further configured to implement a comparator (304) and, in the first mode of operation (402), the second controller (300, 300-2) is configured to determine a predicted unit control input for the one or more units (110) of the vehicle combination (100) based on the reference input, and the comparator (304) is configured to compare the one or more requested unit control inputs from the first controller (300, 300-1) and the one or more predicted unit control inputs from the second controller (300, 300-2), and, if there is a difference between the one or more requested unit control inputs and the one or more predicted unit control inputs, determine that there is a fault associated with the first controller (300, 300-1) or the second controller (300, 300-2).
Example 9: The computer system (200) of example 8, wherein the processing circuitry is further configured to implement a dummy controller (306) and, in the first mode of operation (402), the dummy controller (306) is configured to determine a dummy unit control input for the one or more units (110) of the vehicle combination (100) based on the reference input, and the comparator (304) is further configured to compare the one or more requested unit control inputs, the one or more predicted vehicle control inputs, and the one or more dummy vehicle control inputs, and determine which of the first controller (300, 300-1) or the second controller (300, 300-2) has a fault based on the comparison.
Example 10: The computer system (200) of any preceding example, wherein the processing circuitry is further configured to implement third controller configured to implement a minimum risk manoeuvre in response to detection of a fault associated with the first controller (300, 300-1) and/or the second controller (300, 300-2).
Example 11: The computer system (200) of any preceding example, wherein the first unit (110, 110-1) is a tractor unit of the vehicle combination (100), and the second unit (110, 110-2) is a trailing unit of the vehicle combination (100).
Example 12: A vehicle (100) comprising the computer system (200) of any preceding example.
Example 13: A computer-implemented method (600, 610) comprising, in a first mode of operation (402), determining (602), at a first controller (300, 300-1) implemented in a first unit (110, 110-1) of a vehicle combination (100), a requested unit control input for one or more units (110) of the vehicle combination (100) based on a reference input representing a requested movement of the vehicle combination (100), receiving (604), by a second controller (300, 300-2) implemented in a second unit (110, 110-2) of the vehicle combination (100), a requested unit control input for the second unit (110, 110-2) from the first controller (300, 300-1), and implementing (608), by the second controller (300, 300-2), the requested unit control input for the second unit (110, 110-2) in the second unit (110, 110-2), and, in a second mode of operation (404), determining (612), by the second controller (300, 300-2), a requested unit control input for one or more units (110) of the vehicle combination (100) based on the reference input.
Example 14: The computer-implemented method (600, 610) of example 13, wherein the second mode of operation (404) is triggered by detection of a fault associated with the first controller (300, 300-1) and/or the first unit (110, 110-1).
Example 15: The computer-implemented method (600, 610) of example 14, further comprising monitoring, by a monitor (300, 300-2), operation of the first controller (300, 300-1) and/or the first unit (110, 110-1) to detect the fault.
Example 16: The computer system (200) of example 15, wherein detecting the fault comprises comparing the requested control input from the first controller (300, 300-1) with one or more requested unit control inputs and/or one or more limits.
Example 17: The computer-implemented method (600, 610) of example 15 or 16, detecting the fault comprises determining sensor values and/or covariance values associated with one or more units (110) of the vehicle combination (100).
Example 18: The computer-implemented method (600, 610) of any of examples 15 to 17, wherein detecting the fault comprises determining sensor values and/or covariance values associated with one or more units (110) of the vehicle combination (100).
Example 19: The computer-implemented method (600, 610) of any preceding example, comprising, in the second mode of operation, implementing, by the second controller (300, 300-2) ia requested unit control input for the first unit (110, 110-1) in the first unit (110, 110-1).
Example 20: The computer-implemented method (600, 610) of any preceding example, further comprising, in the first mode of operation (402), determining, by the second controller (300, 300-2) a predicted unit control input for the one or more units (110) of the vehicle combination (100) based on the reference input, and comparing, by a comparator (304), the one or more requested unit control inputs from the first controller (300, 300-1) and the one or more predicted unit control inputs from the second controller (300, 300-2), and, if there is a difference between the one or more requested unit control inputs and the one or more predicted unit control inputs, determining, by the comparator (304), that there is a fault associated with the first controller (300, 300-1) or the second controller (300, 300-2).
Example 21: The computer-implemented method (600, 610) of example 20, further comprising, in the first mode of operation (402), determining, by a dummy controller (306), a dummy unit control input for the one or more units (110) of the vehicle combination (100) based on the reference input, and comparing, by the comparator (304), the one or more requested unit control inputs, the one or more predicted vehicle control inputs, and the one or more dummy vehicle control inputs, and determining, by the comparator (304), which of the first controller (300, 300-1) or the second controller (300, 300-2) has a fault based on the comparison.
Example 22: The computer-implemented method (600, 610) of any preceding example, further comprising implementing, by a third controller, a minimum risk manoeuvre in response to detection of a fault associated with the first controller (300, 300-1) and/or the second controller (300, 300-2).
Example 23: The computer-implemented method (600, 610) of any preceding example, wherein the first unit (110, 110-1) is a tractor unit of the vehicle combination (100), and the second unit (110, 110-2) is a trailing unit of the vehicle combination (100).
Example 24: A computer program product comprising program code for performing, when executed by processing circuitry, the computer-implemented method (600, 610) of any of examples 13 to 23.
Example 25: A non-transitory computer-readable storage medium comprising instructions, which when executed by processing circuitry, cause the processing circuitry to perform the computer-implemented method (600, 610) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (200) for a vehicle combination (100), the computer system (200) comprising processing circuitry configured to implement:
a first controller (300, 300-1) implemented in a first unit (110, 110-1) of the vehicle combination (100), the first controller (300, 300-1) configured to, in a first mode of operation (402), determine a requested unit control input for one or more units (110) of the vehicle combination (100) based on a reference input representing a requested movement of the vehicle combination (100); and
a second controller (300, 300-2) implemented in a second unit (110, 110-2) of the vehicle combination (100), the second controller (300, 300-2) configured to:
in the first mode of operation (402), receive a requested unit control input for the second unit (110, 110-2) from the first controller (300, 300-1), and implement the requested unit control input for the second unit (110, 110-2) in the second unit (110, 110-2); and
in a second mode of operation (404), determine a requested unit control input for one or more units (110) of the vehicle combination (100) based on the reference input.

2. The computer system (200) of claim 1, wherein the second mode of operation (404) is triggered by detection of a fault associated with the first controller (300, 300-1) and/or the first unit (110, 110-1).

3. The computer system (200) of claim 2, wherein the processing circuitry is further configured to implement a monitor (302, 302-2) configured to monitor operation of the first controller (300, 300-1) and/or the first unit (110, 110-1) and detect the fault.

4. The computer system (200) of claim 3, wherein the monitor (302, 302-2) is configured to detect the fault by comparing the requested control input from the first controller (300, 300-1) with one or more requested unit control inputs and/or one or more limits.

5. The computer system (200) of claim 3 or 4, wherein the monitor (302, 302-2) is configured to detect the fault by determining sensor values and/or covariance values associated with one or more units (110) of the vehicle combination (100).

6. The computer system (200) of any of claims 3 to 5, wherein the monitor (302, 302-2) is implemented in the second controller (300, 300-2).

7. The computer system (200) of any preceding claim, wherein, in the second mode of operation, the second controller (300, 300-2) is configured to implement a requested unit control input for the first unit (110, 110-1) in the first unit (110, 110-1).

8. The computer system (200) of any preceding claim, wherein the processing circuitry is further configured to implement a comparator (304) and, in the first mode of operation (402):
the second controller (300, 300-2) is configured to determine a predicted unit control input for the one or more units (110) of the vehicle combination (100) based on the reference input; and
the comparator (304) is configured to compare the one or more requested unit control inputs from the first controller (300, 300-1) and the one or more predicted unit control inputs from the second controller (300, 300-2), and, if there is a difference between the one or more requested unit control inputs and the one or more predicted unit control inputs, determine that there is a fault associated with the first controller (300, 300-1) or the second controller (300, 300-2).

9. The computer system (200) of claim 8, wherein the processing circuitry is further configured to implement a dummy controller (306) and, in the first mode of operation (402):
the dummy controller (306) is configured to determine a dummy unit control input for the one or more units (110) of the vehicle combination (100) based on the reference input; and
the comparator (304) is further configured to compare the one or more requested unit control inputs, the one or more predicted vehicle control inputs, and the one or more dummy vehicle control inputs, and determine which of the first controller (300, 300-1) or the second controller (300, 300-2) has a fault based on the comparison.

10. The computer system (200) of any preceding claim, wherein the processing circuitry is further configured to implement a third controller configured to implement a minimum risk manoeuvre in response to detection of a fault associated with the first controller (300, 300-1) and/or the second controller (300, 300-2).

11. The computer system (200) of any preceding claim, wherein the first unit (110, 110-1) is a tractor unit of the vehicle combination (100), and the second unit (110, 110-2) is a trailing unit of the vehicle combination (100).

12. A vehicle (100) comprising the computer system (200) of any preceding claim.

13. A computer-implemented method (600, 610) comprising:
in a first mode of operation (402):
determining (602), at a first controller (300, 300-1) implemented in a first unit (110, 110-1) of a vehicle combination (100), a requested unit control input for one or more units (110) of the vehicle combination (100) based on a reference input representing a requested movement of the vehicle combination (100);
receiving (604), by a second controller (300, 300-2) implemented in a second unit (110, 110-2) of the vehicle combination (100), a requested unit control input for the second unit (110, 110-2) from the first controller (300, 300-1); and
implementing (606), by the second controller (300, 300-2), the requested unit control input for the second unit (110, 110-2) in the second unit (110, 110-2); and
in a second mode of operation (404):
determining (612), by the second controller (300, 300-2), a requested unit control input for one or more units (110) of the vehicle combination (100) based on the reference input.

14. A computer program product comprising program code for performing, when executed by processing circuitry, the computer-implemented method (600, 610) of claim 13.

15. A non-transitory computer-readable storage medium comprising instructions, which when executed by processing circuitry, cause the processing circuitry to perform the computer-implemented method (600, 610) of claim 13.

## Amended claims

### Amended claims in accordance with Rule 137(2) EPC.

1. A computer system (200) for a vehicle combination (100), the computer system (200) comprising processing circuitry configured to implement:
a first controller (300, 300-1) implemented in a first unit (110, 110-1) of the vehicle combination (100), the first controller (300, 300-1) configured to, in a first mode of operation (402), determine a requested unit control input for one or more units (110) of the vehicle combination (100) based on a reference input representing a requested movement of the vehicle combination (100); and
a second controller (300, 300-2) implemented in a second unit (110, 110-2) of the vehicle combination (100), the second controller (300, 300-2) configured to:
in the first mode of operation (402), receive a requested unit control input for the second unit (110, 110-2) from the first controller (300, 300-1), and implement the requested unit control input for the second unit (110, 110-2) in the second unit (110, 110-2); and
in a second mode of operation (404), determine a requested unit control input for one or more units (110) of the vehicle combination (100) based on the reference input;
wherein the processing circuitry is further configured to implement a monitor (302, 302-2) in the second controller (300, 300-2) configured to monitor operation of the first controller (300, 300-1) and/or the first unit (110, 110-1) and detect the fault.

2. The computer system (200) of claim 1, wherein the second mode of operation (404) is triggered by detection of a fault associated with the first controller (300, 300-1) and/or the first unit (110, 110-1).

3. The computer system (200) of claim 1 or 2, wherein the monitor (302, 302-2) is configured to detect the fault by comparing the requested control input from the first controller (300, 300-1) with one or more requested unit control inputs and/or one or more limits.

4. The computer system (200) of claim 3, wherein the monitor (302, 302-2) is configured to detect the fault by determining sensor values and/or covariance values associated with one or more units (110) of the vehicle combination (100).

5. The computer system (200) of any preceding claim, wherein, in the second mode of operation, the second controller (300, 300-2) is configured to implement a requested unit control input for the first unit (110, 110-1) in the first unit (110, 110-1).

6. The computer system (200) of any preceding claim, wherein the processing circuitry is further configured to implement a comparator (304) and, in the first mode of operation (402):
the second controller (300, 300-2) is configured to determine a predicted unit control input for the one or more units (110) of the vehicle combination (100) based on the reference input; and
the comparator (304) is configured to compare the one or more requested unit control inputs from the first controller (300, 300-1) and the one or more predicted unit control inputs from the second controller (300, 300-2), and, if there is a difference between the one or more requested unit control inputs and the one or more predicted unit control inputs, determine that there is a fault associated with the first controller (300, 300-1) or the second controller (300, 300-2).

7. The computer system (200) of claim 6, wherein the processing circuitry is further configured to implement a dummy controller (306) and, in the first mode of operation (402):
the dummy controller (306) is configured to determine a dummy unit control input for the one or more units (110) of the vehicle combination (100) based on the reference input; and
the comparator (304) is further configured to compare the one or more requested unit control inputs, the one or more predicted vehicle control inputs, and the one or more dummy vehicle control inputs, and determine which of the first controller (300, 300-1) or the second controller (300, 300-2) has a fault based on the comparison.

8. The computer system (200) of any preceding claim, wherein the processing circuitry is further configured to implement a third controller configured to implement a minimum risk manoeuvre in response to detection of a fault associated with the first controller (300, 300-1) and/or the second controller (300, 300-2).

9. The computer system (200) of any preceding claim, wherein the first unit (110, 110-1) is a tractor unit of the vehicle combination (100), and the second unit (110, 110-2) is a trailing unit of the vehicle combination (100).

10. A vehicle (100) comprising the computer system (200) of any preceding claim.

11. A computer-implemented method (600, 610) comprising:
in a first mode of operation (402):
determining (602), at a first controller (300, 300-1) implemented in a first unit (110, 110-1) of a vehicle combination (100), a requested unit control input for one or more units (110) of the vehicle combination (100) based on a reference input representing a requested movement of the vehicle combination (100);
receiving (604), by a second controller (300, 300-2) implemented in a second unit (110, 110-2) of the vehicle combination (100), a requested unit control input for the second unit (110, 110-2) from the first controller (300, 300-1); and
implementing (606), by the second controller (300, 300-2), the requested unit control input for the second unit (110, 110-2) in the second unit (110, 110-2); and
in a second mode of operation (404):
determining (612), by the second controller (300, 300-2), a requested unit control input for one or more units (110) of the vehicle combination (100) based on the reference input:
the computer-implemented method (600, 610) further comprising monitoring, by a monitor (300, 300-2) implemented in the second controller (300, 300-2), operation of the first controller (300, 300-1) and/or the first unit (110, 110-1) to detect the fault.

12. A computer program product comprising program code for performing, when executed by processing circuitry, the computer-implemented method (600, 610) of claim 11.

13. A non-transitory computer-readable storage medium comprising instructions, which when executed by processing circuitry, cause the processing circuitry to perform the computer-implemented method (600, 610) of claim 11.
